# EUROPÄISCHE PATENTSCHRIFT

(11) **EP 1 529 678 B1**
(45) Veröffentlichungstag und Bekanntmachung des Hinweises auf die Patenterteilung: **26.08.2009**
(21) Anmeldenummer: 04090422.9
(22) Anmeldetag: 05.11.2004
(51) Int. Cl.: B60K 35/00

(54) **Informations-/Kommunikationssystem für ein Kraftfahrzeug**
Information/ communication system for a motor vehicle
Système de communication/ information pour automobile

(30) Priorität: 07.11.2003 DE 10353402
(43) Veröffentlichungstag der Anmeldung: 11.05.2005
(73) Patentinhaber: Volkswagen AG, 38436 Wolfsburg (DE)
(72) Erfinder: Soltendiek, Bernd, 38108 Braunschweig (DE); Kuhn, Mathias, 14109 Berlin (DE); Hofmann, Robert, 10777 Berlin (DE); Hofmann, Gustav, 38114 Braunschweig (DE); Medler, Andreas, 38268 Lengede (DE); Bauer, Michael, 38102 Braunschweig (DE); Michaelis, Frank, 38102 Braunschweig (DE)
(74) Vertreter: Hengelhaupt, Jürgen

(56) Entgegenhaltungen:
- EP-A- 0 884 220
- DE-C1- 10 056 305
- US-A- 6 067 078
- PATENT ABSTRACTS OF JAPAN Bd. 1999, Nr. 01, 29. Januar 1999 (1999-01-29) & JP 10 287188 A (DENSO CORP), 27. Oktober 1998 (1998-10-27)
- PATENT ABSTRACTS OF JAPAN Bd. 2000, Nr. 02, 29. Februar 2000 (2000-02-29) & JP 11 301364 A (XANAVI INFORMATICS CORP), 2. November 1999 (1999-11-02)

## Beschreibung

Die Erfindung betrifft ein Informations-/Kommunikationssystem für ein Kraftfahrzeug mit den im Oberbegriff des Anspruchs 1 genannten Merkmalen.

Die Anzahl von Informationen, die einem Fahrzeugführer aufgrund der steigenden Anzahl von Funktionsmodulen, wie Navigationssystem, Telekommunikationseinrichtungen, Radio, Compact Disc, bereitgestellt werden, sowie gewünschte Warnhinweise etc. steigen zunehmend an. Um die entsprechenden Parameter oder Daten für die einzelnen Funktionsmodule in gewünschter Weise eingeben zu können, beispielsweise die Zieladresse für die Navigation oder die zu wählende Telefonnummer, ist regelmäßig eine Eingabevorrichtung zur Eingabe der genannten Parameter/Daten vorgesehen. Um die Übersichtlichkeit bezüglich dieser Parameter zu erhöhen, ist es bekannt, ein Display zu verwenden, über welches die einzelnen Parameter/Daten angezeigt werden können.

Um den Fahrzeugführer während der Fahrt möglichst wenig abzulenken und ihm trotzdem sämtliche, für ihn relevante Informationen der vorhandenen Funktionsmodule, wie Telefon oder Navigationssystem, zur Verfügung zu stellen, ist das Display vorzugsweise derart angeordnet, dass der Fahrer dieses ohne eine erhebliche Ablenkung vom Straßenverkehrsgeschehen einsehen kann. Dazu ist das Display beispielsweise in der Armaturentafel angeordnet. Weiterhin ist es bekannt, zur Eingabe von Parametern oder Daten für die einzelnen Funktionsmodule ein Eingabemodul, beispielsweise in der Mittelkonsole oder am Lenkrad des Fahrzeuges, anzuordnen, da dieses besonders einfach durch den Fahrzeugführer bedient werden kann.

Nachteilig an den genannten Vorrichtungen nach dem Stand der Technik ist es, dass das für den Fahrzeugführer vorteilhaft angeordnete Display regelmäßig von den Mitfahrern schlecht eingesehen werden kann. Deshalb ist es für die Mitfahrer meist schwierig, sich während der Fahrt über Informationsgehalte von Funktionsmodulen, beispielsweise Infotexte oder Internet, informieren zu können. Weiterhin nachteilig ist es, dass die meist in der Mittelkonsole oder am Lenkrad angeordneten Eingabemodule für die Mitfahrer schlecht erreichbar sind. Weiterhin ist es mit den bekannten Vorrichtungen nach dem Stand der Technik nicht möglich, für einzelne Fahrzeuginsassen unterschiedliche Informationsgehalte, beispielsweise für den Fahrer das Navigationssystem und für den Beifahrer das Internet, bereitzustellen.

Die EP 0 884 220 A2 offenbart eine Vorrichtung zur Anzeige und Steuerung von Funktionen in einem Kraftfahrzeug, wobei mittels eines Master-Bedienfeldes einem Slave-Bedienfeld Funktionen programmierbar zuordenbar sind, gemäss den Merkmalen des Oberbegriffes von Anspruch 1.

Es ist Aufgabe der vorliegenden Erfindung, ein Informations-/Kommunikationssystem für ein Fahrzeug zur Verfügung zu stellen, mittels welchem für einzelne Mitfahrer separate Informationsgehalte vorhandener Funktionsmodule dargestellt werden können, wobei zu einem Zeitpunkt lediglich über ein Eingabemodul Daten für ein Funktionsmodul eingegeben werden können.

Diese Aufgabe wird erfindungsgemäß gelöst durch die Merkmale im kennzeichnenden Teil des Anspruchs 1 im Zusammenwirken mit den Merkmalen des Oberbegriffs. Bevorzugte Ausgestaltungen sind in den Unteransprüchen enthalten.

Dadurch, dass ein Informations-/Kommunikationssystem für ein Kraftfahrzeug zur Darstellung von vordefinierten Informationsgehalten vordefinierter Funktionsmodule wie beispielsweise Navigation, Radio oder Compact Disc, in einem Steuergerät sowie zur Eingabe von Daten zur Bedienung der vordefinierten Funktionsmodule ausgebildet wird, wobei mindestens zwei Displays zur Darstellung der vordefinierten Informationsgehalte vorgesehen sind, die in einem mit den mindestens zwei Displays verbundenem Steuergerät zur Verfügung stehen und anforderbar sind, sowie mindestens zwei Eingabemodule, zur Eingabe von Daten und/oder Befehlen, die mit dem Steuergerät verbunden sind und deren Eingaben dort verarbeitet werden, wobei das Steuergerät mit sämtlichen Displays und Eingabemodulen verbunden ist, und mindestens ein Display und mindestens ein Eingabemodul einem Fahrer des Kraftfahrzeuges und mindestens ein Display und mindestens ein Eingabemodul einem Mitfahrer zugeordnet sind und für die Funktionsmodule festlegbar sind, über welches Display oder über welche Displays die zugehörigen, in dem Steuergerät zur Verfügung stehenden, Informationsgehalte der Funktionsmodule darstellbar sind und über welches Eingabemodul oder über welche Eingabemodule, welche Daten und/oder Befehle, die in dem Steuergerät zur Verfügung stehen, für die Funktionsmodule eingebbar sind,und wobei die Daten- und/oder Befehlseingabe für ein Funktionsmodul über jedes der mindestens zwei Eingabemodule jeweils die Daten- und/oder Befehlseingabe von allen anderen Eingabemodulen für dieses Funktionsmodul sperrt, können sich unterschiedliche Fahrzeuginsassen die für sie relevanten Informationsgehalte der vorhandenen Funktionsmodule des Fahrzeuges separat anzeigen lassen. Funktionsmodule können auch einzelne Funktionen, Funktionsgruppen, Anwendungen und/oder Komponenten sein.

Weiterhin ist es möglich, Daten oder Parameter für ein Funktionsmodul durch ein einem Fahrzeuginsassen zugeordnetes Eingabemodul einzugeben. Dabei ist es vorgesehen, dass für ein Funktionsmodul zu einer bestimmten Zeit Daten lediglich über ein Eingabemodul eingegeben werden können, da eine gleichzeitige Dateneingabe für ein Funktionsmodul durch mehrere Fahrzeuginsassen nicht wünschenswert ist.

Durch das erfindungsgemäße Informations-/Kommunikationssystem ist es so möglich, dass der Fahrzeugführer lediglich die für ihn relevanten Informationsgehalte angezeigt bekommt und daher eine Ablenkung aufgrund anderer Informationsgehalte (beispielsweise Internet oder Television), welche für die Mitfahrer interessant sein können, weitgehend ausgeschlossen werden kann. Weiterhin ist es vorgesehen, dass für jedes Funktionsmodul separat festlegbar ist, über welches Display oder über welche Displays der zugehörige Informationsgehalt des Funktionsmoduls darstellbar ist. Beispielsweise können nur für den Fahrzeugführer relevante Daten, insbesondere das Fahrzeug oder die Fahrzeugsteuerung betreffende Daten, wie beispielsweise eine Parklückenvermessung oder ein semiautonomer Einparkassistent, lediglich auf dem dem Fahrzeugführer zugeordneten Display darstellbar sein. Dies bedeutet, dass dieses Funktionsmodul für die Mitfahrer nicht darstellbar und sofern gewünscht, auch nicht über deren Eingabemodule anwählbar ist. So ist es beispielsweise auch möglich, dass ein Funktionsmodul, beispielsweise das Funktionsmodul für relevante Fahrzeugdaten, welches beispielsweise den Tageskilometerzähler enthält, zwar über sämtliche Displays (Fahrzeugführer und Mitfahrer) darstellbar ist, jedoch eine Dateneingabe (Rücksetzen des Tageskilometerzählers) lediglich über das dem Fahrzeugführer zugeordnete Eingabemodul möglich ist. Weiterhin ist es möglich, Funktionsmodule, wie beispielsweise Television, während der Fahrt lediglich über das Display/die Displays des Mitfahrers/der Mitfahrer darzustellen, da eine Ablenkung des Fahrzeugführers durch das Funktionsmodul Television (TV) während der Fahrt nicht möglich sein soll.

Durch das erfindungsgemäße Informations-/Kommunikationssystem ergeben sich eine Reihe von Vorteilen. So ist es beispielsweise möglich, dass sich der Fahrzeugführer bei Fahrtantritt beispielsweise den Einparkassistenten zum Ausparken aus einer engen Parklücke in dem ihm zugeordneten Display anzeigen lässt. Zur gleichen Zeit kann sich bereits der Beifahrer über das ihm zugeordnete Display das Funktionsmodul des Navigationssystems anzeigen lassen und ein neues Fahrtziel eingeben. Dies ist insbesondere deshalb vorteilhaft, da der Beifahrer über das ihm zugeordnete Eingabemodul und das ihm zugeordnete Display das Funktionsmodul Navigationssystem in besonders einfacher Weise bedienen kann, da sowohl eine gute Sicht auf das Display als auch eine gute Erreichbarkeit des Eingabemoduls gewährleistet ist. Dadurch wird vorteilhafterweise vermieden, dass der Fahrzeugführer aufgrund einer notwendigen Eingabe einer Zielvorgabe für das Navigationssystem vom Straßenverkehrsgeschehen abgelenkt wird. Sobald die erforderlichen Daten/Parameter für das Navigationssystem über das Eingabemodul des Beifahrers eingegeben worden sind, kann sich auch der Fahrer über das ihm zugeordnete Display das Funktionsmodul Navigationssystem anzeigen lassen, um die entsprechenden Richtungsangaben (Informationsgehalt des Funktionsmoduls "Navigation") in optischer Darstellung zu erhalten.

Vorzugsweise ist das dem Fahrer zugeordnete Eingabemodul in der Mittelkonsole des Fahrzeuges und/oder am Lenkrad des Fahrzeuges und das dem Fahrer zugeordnete Display in der Armaturentafel direkt vor dem Fahrer angeordnet. Das dem Mitfahrer auf dem Beifahrersitz zugeordnete Funktionsmodul sowie das diesem Mitfahrer zugeordnete Display ist vorzugsweise in der Armaturentafel direkt vor dem Beifahrersitz angeordnet. Ein einem Mitfahrer auf der Rücksitzbank zugeordnetes Eingabemodul sowie das diesem Mitfahrer zugeordnete Display ist vorzugsweise in der Rückseite einer Rückenlehne eines der vorderen Fahrzeugsitze integriert.

In einer besonders bevorzugten Ausführungsvariante sind Display und/oder Eingabemodul herausklappbar ausgebildet. In einer weiteren bevorzugten Ausführungsvariante ist das diesem Mitfahrer zugeordnete Eingabemodul und das dem Mitfahrer zugeordnete Display als einheitliches Kombinationsmodul ausgebildet, welches über einen Steckanschluss zur Stromversorgung verfügt. Hierdurch wird eine Verkabelung beim Einbau beziehungsweise bei der Nachrüstung des Displays vermieden. Dieses Kombinationsmodul kann für sämtliche Mitfahrer, das heißt für den Beifahrer auf dem Vordersitz sowie für die Fondinsassen, in gleicher Weise hergestellt werden, wodurch ein Kostenvorteil entsteht. In einer besonders bevorzugten Ausführungsvariante weist das Kombinationsmodul mindestens einen Sender und mindestens einen Empfänger zur drahtlosen Datenkommunikation auf. Hierdurch wird insbesondere eine Verkabelung des Kombinationsmoduls, beispielsweise über die Rückenlehne der Vordersitze oder über die Armaturentafel, vermieden. Hierdurch kann eine Aufrüstung bereits vorhandener Informations-/Kommunikationssysteme erfolgen, ohne dass eine zusätzliche Verkabelung notwendig wird.

Die Erfindung wird nachfolgend in einem Ausführungsbeispiel anhand der zugehörigen Zeichnungen näher erläutert. Es zeigen:
- Figur 1: ein Kombinationsmodul bestehend aus einem Display und einem Eingabemodul in schematischer Darstellung;
- Figur 2: ein Kombinationsmodul in perspektivischer Darstellung und
- Figur 3: ein erfindungsgemäßes Informations-/Kommunikationssystem.

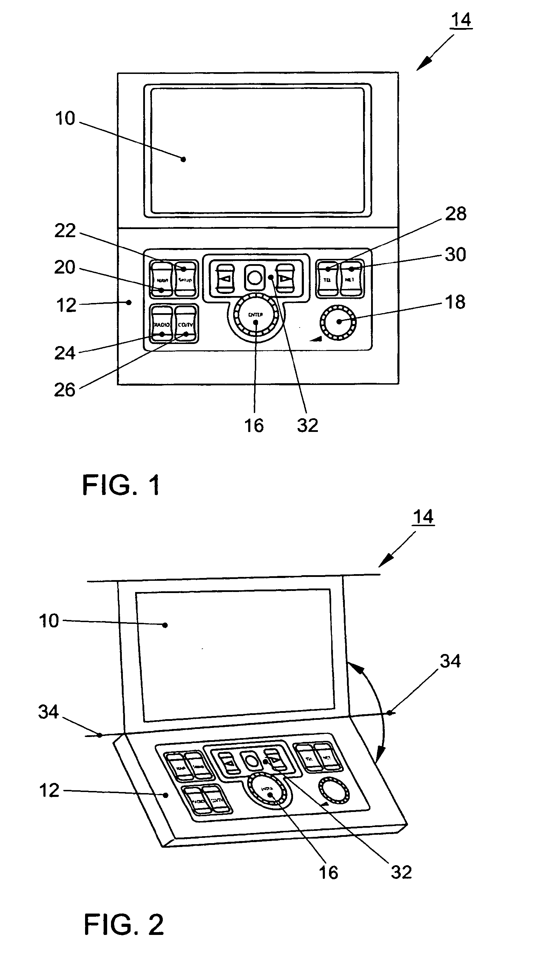

Um geringe Produktionskosten für das Informations-/Kommunikationssystem nach der Erfindung realisieren zu können, werden je ein Display 10 und ein Eingabemodul 12 miteinander verbunden und bilden so ein Kombinationsmodul 14 aus, wie in Figur 1 schematisch dargestellt ist. Da das erfindungsgemäße Informations-/Kommunikationssystem mindestens zwei Displays und mindestens zwei Eingabemodule aufweist, kann das erfindungsgemäße Informations-/Kommunikationssystem beispielsweise aus einem in der Armaturentafel angeordneten, dem Fahrzeugführer zugeordneten Display 10, einem dem Fahrer zugeordneten, im Lenkrad und/oder in der Mittelkonsole angeordneten Eingabemodul 12 sowie mindestens einem weiteren Kombinationsmodul 14 (Figur 1) bestehen. Dieses Kombinationsmodul 14 kann für den Beifahrer beispielsweise in der Armaturentafel direkt vor dem Beifahrer angeordnet sein. Das erfindungsgemäße Informations-/ Kommunikationssystem ist jedoch nicht auf zwei Displays 10 und zwei Eingabemodule 12 beschränkt. So ist es beispielsweise denkbar, für jeden Fahrzeuginsassen ein Kombinationsmodul 14 (Figur 1) vorzusehen, wobei die für den Frontinsassen zugeordneten Kombinationsmodule 14 in der Armaturentafel vor den Fahrzeuginsassen und die den Fondinsassen zugeordneten Funktionsmodule 14 in den Rücksitzen der Vordersitze angeordnet sind.

Das Kombinationsmodul 14 weist ein Display 10 und ein Eingabemodul 12 auf. Das Eingabemodul 12 weist einen Drehschalter 16 für Einstellungen sowie ein Bedienfeld 32 für Einstellungen der einzelnen Funktionsmodule, wie beispielsweise Einparkassistent, Navigationssystem, Fahrzeugeinstellungen, Radio, Compact Disc, Television, Telefon oder Internet, auf. Weiterhin weist das Kombinationsmodul 14 einen Drehschalter 18 für die Lautstärke, beispielsweise bei der Ansage des Navigationssystems, auf. Weiterhin weist das Eingabemodul 12 eine Wahltaste 20 für die Navigation, eine Wahltaste 22 für Fahrzeugeinstellungen, eine Wahltaste 24 für Radio, eine Wahltaste 26 für Compact Disc/Television und eine Wahltaste 28 für Telefon sowie eine Wahltaste 30 für Internet auf.

Der besondere Vorteil des erfindungsgemäßen Informations-/Kommunikationssystems besteht darin, dass jeder Fahrzeuginsasse, sofern er über ein ihm zugeordnetes Display 10 und ein ihm zugeordnetes Eingabemodul 12 verfügt, sich die vordefinierten Informationsgehalte der Funktionsmodule darstellen lassen kann, und soweit es für sein Eingabemodul 12 vorgesehen ist, Daten beziehungsweise Parameter für die Bedienung der einzelnen Funktionsmodule eingeben kann. Hierdurch wird es erfindungsgemäß ermöglicht, dass sich unterschiedliche Fahrzeuginsassen auf ihren Displays 10 unterschiedliche Informationsgehalte darstellen lassen. So ist es beispielsweise möglich, für den Fahrzeugführer die für ihn wesentlichen Informationsgehalte, beispielsweise die Informationen des Navigationssystems darzustellen. Zur gleichen Zeit können jedoch andere Fahrzeuginsassen andere Informationsgehalte, beispielsweise Telefon oder Internet, darstellen und mittels der ihnen zugeordneten Eingabemodule 12 entsprechende Parameter beziehungsweise Daten für die Bedienung der einzelnen Funktionsmodule eingeben. Weiterhin wird es durch die Zuordnung eines Displays 10 sowie eines Eingabemoduls 12 ermöglicht, dass der jeweilige Fahrzeuginsasse bequem eine Bedienung beziehungsweise Dateneingabe vornehmen kann und eine gute Sicht auf das (ihm zugeordnete) Display 10 aufgrund der Anordnung vor dem (jeweiligen) Fahrzeuginsassen erhält.

Weiterhin vorteilhaft ist es, dass Mitfahrer bestimmte Eingaben von Daten oder Parametern für die Bedienung von Funktionsmodulen auf den ihnen zugeordneten Kombinationsmodulen 14 vornehmen können, ohne den Fahrer hierdurch abzulenken. So ist es beispielsweise möglich, dass der Beifahrer über das ihm zugeordnete Kombinationsmodul 14 eine neue Zieleingabe für das Navigationssystem durch Anwahl des Funktionsmoduls "Navigationssystem" durch Drücken der Wahltaste 20 vornimmt. Mittels des Drehschalters 18 und des Bedienfeldes 32 kann der Mitfahrer nun, ohne den Fahrer hierdurch abzulenken, ein neues Fahrtziel eingeben. Ist dieser Eingabevorgang abgeschlossen und zeigt das Navigationssystem nun die Fahrtrichtung sowie weitere Hinweise zum Routenverlauf an, kann der Fahrzeugführer über das ihm zugeordnete Display 10 sich die für ihn wesentlichen Informationen anzeigen lassen. Um die den Mitfahrern zugeordneten Displays 10 und Eingabemodule 12 (Kombinationsmodule 14) möglichst gut in das Fahrzeug zu integrieren, ist es im Ausführungsbeispiel nach Figur 2 vorgesehen, dass das Display 10 in Relation zum Eingabemodul 12 um die Drehachse 34 klappbar ist. So ist es möglich, entweder das Eingabemodul 12 fest, beispielsweise auf der Rückseite des Fahrzeugsitzes oder auf der Armaturentafel vor dem Beifahrer anzuordnen, wobei das Display 10 drehbeweglich um die Drehachse 34 angeordnet ist. Hierdurch ist es für den Beifahrer möglich, bei Bedarf das Display 10 hochzuklappen, um sich die gewünschten Informationsgehalte der Funktionsmodule anzeigen zu lassen beziehungsweise Daten oder Parameter zur Bedienung der Funktionsmodule einzugeben. Alternativ ist es möglich, das Display 10 fest anzuordnen, wobei das Eingabemodul 12 dann drehbeweglich um die Drehachse 34 angeordnet ist und somit herausklappbar ist.

Zur Vermeidung einer notwendigen, zusätzlichen Verkabelung und um eine besonders einfache Nachrüstbarkeit von zusätzlichen Kombinationsmodulen 14, bestehend aus einem Display 10 und einem Eingabemodul 12, zu ermöglichen, ist erfindungsgemäß vorgesehen, dass das Kombinationsmodul 14 einen Steckanschluss für eine Stromverbindung aufweist. Sämtliche Daten werden über Mittel zur drahtlosen Kommunikation übertragen. Dieses Mittel zur drahtlosen Kommunikation kann beispielsweise ein Infrarotsender/Infrarotempfänger sein. Hierdurch kann ein bereits vorhandenes Informations-/Kommunikationssystem beliebig (maximal bis zur Anzahl der Fahrzeuginsassen) erweitert werden. Dabei kann es vorteilhafterweise vermieden werden, dass zusätzliche Datenleitungen im Fahrzeug verlegt werden müssen.

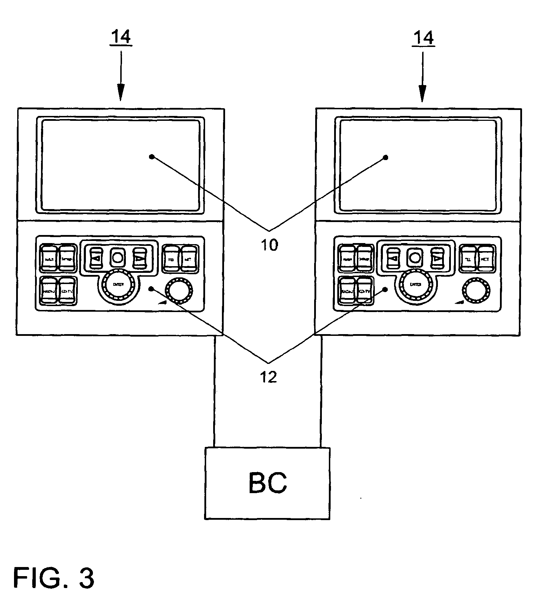

Figur 3 zeigt ein erfindungsgemäßes Informations-/Kommunikationssystem mit zwei Kombinationsmodulen 14, welche mit dem Bordcomputer BC des Fahrzeuges verbunden sind. Der Bordcomputer (oder auch ein anderes Steuergerät) kommuniziert (vorzugsweise drahtlos) mit den einzelnen Kombinationsmodulen 14 und stellt diesen die angeforderten Informationsgehalte zur Verfügung. Weiterhin verarbeitet der Bordcomputer 14 die über die Eingabemodule 12 eingegebenen Daten/Parameter und stellt sicher, dass zu einem Zeitpunkt lediglich über ein Eingabemodul Daten für ein Funktionsmodul eingegeben werden können, indem während der Eingabe von Daten/Parametern für ein Funktionsmodul die Dateneingabe für dieses Funktionsmodul über andere Eingabemodule gesperrt oder ignoriert wird. Der Bordcomputer ist darüber hinaus mit Sensoren und/oder Empfängern verbunden, mittels welcher Informationen der einzelnen Funktionsmodule generierbar sind. Solche Empfänger können beispielsweise GPS-Empfänger, Lenkwinkelsensoren oder Ultraschallsensoren sein.

### BEZUGSZEICHENLISTE

- 10: Display
- 12: Eingabemodul
- 14: Kombinationsmodul
- 16: Drehschalter für Einstellungen
- 18: Drehschalter für Lautstärke
- 20: Wahltaste für die Navigation
- 22: Wahltaste für Fahrzeugeinstellungen
- 24: Wahltaste für Radio
- 26: Wahltaste für Compact Disc/Television
- 28: Wahltaste für Telefon
- 30: Wahltaste für Internet
- 32: Bedienfeld für Einstellungen der Funktionsmodule
- 34: Drehachse von Display und Eingabemodul

- BC: Bordcomputer

## Patentansprüche

1. Informations-/Kommunikationssystem für ein Kraftfahrzeug zur Darstellung von vordefinierten Informationsgehalten vordefinierter Funktionsmodule in einem Steuergerät sowie zur Eingabe von Daten zur Bedienung der vordefinierten Funktionsmodule, wobei mindestens zwei Displays (10) zur Darstellung der vordefinierten Informationsgehalte vorgesehen sind, die in einem mit den mindestens zwei Displays (10) verbundenem Steuergerät zur Verfügung stehen und anforderbar sind, sowie mindestens zwei Eingabemodule (12) zur Eingabe von Daten und/oder Befehlen, die mit dem Steuergerät verbunden sind und deren Eingaben dort verarbeitet werden, wobei das Steuergerät mit sämtlichen Displays (10) und Eingabemodulen (12) verbunden ist, und mindestens ein Display (10) und mindestens ein Eingabemodul (12) einem Fahrer des Kraftfahrzeuges und mindestens ein Display (10) und mindestens ein Eingabemodul (12) einem Mitfahrer zugeordnet sind und für die Funktionsmodule (20, 22, 24, 26, 28, 30) festlegbar ist, über welches Display (10) oder über welche Displays (10) die zugehörigen, in dem Steuergerät zur Verfügung stehenden, Informationsgehalte der Funktionsmodule(20, 22, 24, 26, 28, 30) darstellbar sind und über welches Eingabemodul (12) oder über welche Eingabemodule (12), welche Daten und/oder Befehle, die in dem Steuergerät zur Verfügung stehen, für die Funktionsmodule(20, 22, 24, 26, 28, 30) eingebbar sind,
**dadurch gekennzeichnet, dass**
die Daten- und/oder Befehlseingabe für ein Funktionsmodul (20, 22, 24, 26, 28, 30) über jedes der mindestens zwei Eingabemodule (12) jeweils die Daten- und/oder Befehlseingabe von allen anderen Eingabemodulen (12) für dieses Funktionsmodul (20, 22, 24, 26, 28, 30) sperrt.

2. Informations-/Kommunikationssystem nach Anspruch 1, **dadurch gekennzeichnet, dass** die Informationsgehalte des Funktionsmoduls für die Einstellung von Fahrzeugparametern oder Fahrzeugfunktionen nicht im Display (10) eines Mitfahrers darstellbar sind.

3. Informations-/Kommunikationssystem nach Anspruch 1, **dadurch gekennzeichnet, dass** über das Eingabemodul (12) des Mitfahrers keine Daten für das Funktionsmodul für die Einstellung von Fahrzeugparametern oder Fahrzeugfunktionen eingebbar sind.

4. lnformations-/Kommunikationssystem nach Anspruch 1, **dadurch gekennzeichnet, dass** das dem Fahrer zugeordnete Eingabemodul (12) in der Mittelkonsole des Fahrzeuges und das dem Fahrer zugeordnete Display (10) in der Armaturentafel direkt vor dem Fahrer angeordnet ist.

5. Informations-/Kommunikationssystem nach Anspruch 1, **dadurch gekennzeichnet, dass** das dem Mitfahrer auf dem Beifahrersitz zugeordnete Eingabemodul (12) und das diesem Mitfahrer zugeordnete Display (10) in der Armaturentafel direkt vor dem Mitfahrer angeordnet ist.

6. Informations-/Kommunikationssystem nach Anspruch 5, **dadurch gekennzeichnet, dass** das Display (10) und/oder das Eingabemodul (12) herausklappbar ausgebildet ist.

7. Informations-/Kommunikationssystem nach Anspruch 1, **dadurch gekennzeichnet, dass** das einem Mitfahrer auf der Rücksitzbank zugeordnete Eingabemodul (12) und das diesem Mitfahrer zugeordnete Display (10) in der Rückseite einer Rückenlehne eines der vorderen Fahrzeugsitze integriert ist.

## Claims

1. Information/communication system for a motor vehicle for showing predefined information contents for predefined functional modules in a controller and also for inputting data for operating the predefined functional modules, wherein at least two displays (10) are provided for showing the predefined information contents which are available and can be requested in a controller connected to the at least two displays (10), and also at least two input modules (12) for inputting data and/or commands which are connected to the controller and whose inputs are processed therein, wherein the controller is connected to all the displays (10) and input modules (12), and at least one display (10) and at least one input module (12) are associated with a driver of the motor vehicle, and at least one display (10) and at least one input module (12) are associated with a passenger, and it is possible to stipulate for the functional modules (20, 22, 24, 26, 28, 30) which display (10) or which displays (10) can be used to show the associated information contents - available in the controller - of the functional modules (20, 22, 24, 26, 28, 30) and which input module (12) or which input modules (12) can be used to input which data and/or commands, which are available in the controller, for the functional modules (20, 22, 24, 26, 28, 30),
**characterized in that**
the data and/or command input for a functional module (20, 22, 24, 26, 28, 30) using each of the at least two input modules (12) blocks the respective data and/or command input from all other input modules (12) for this functional module (20, 22, 24, 26, 28, 30).

2. Information/communication system according to Claim 1, **characterized in that** the information contents of the functional module for adjusting vehicle parameters or vehicle functions cannot be shown in the display (10) of a passenger.

3. Information/communication system according to Claim 1, **characterized in that** the input module (12) of the passenger cannot be used to input data for the functional module for adjusting vehicle parameters or vehicle functions.

4. Information/communication system according to Claim 1, **characterized in that** the input module (12) associated with the driver is arranged in the centre console of the vehicle, and the display (10) associated with the driver is arranged in the dashboard directly in front of the driver.

5. Information/communication system according to Claim 1, **characterized in that** the input module (12) associated with the passenger in the passenger seat and the display (10) associated with this passenger are arranged in the dashboard directly in front of the passenger.

6. Information/communication system according to Claim 5, **characterized in that** the display (10) and/or the input module (12) are in swing-out form.

7. Information/communication system according to Claim 1, **characterized in that** the input module (12) associated with a passenger in the back seat and the display (10) associated with this passenger are integrated in the back of a backrest of one of the front vehicle seats.

## Revendications

1. Système d'information/de communication pour un véhicule automobile destiné à représenter des contenus d'information prédéfinis de modules fonctionnels prédéfinis dans un module de commande ainsi qu'à saisir des données pour commander les modules fonctionnels prédéfinis, au moins deux afficheurs (10) destinés à représenter les contenus d'information prédéfinis étant prévus, lesquels sont disponibles et interrogeables dans un module de commande relié avec les au moins deux afficheurs (10), et aussi au moins deux modules de saisie (12) pour saisir des données et/ou des instructions, lesquels sont reliés avec le module de commande et dont les saisies y sont traitées, le module de commande étant relié avec tous les afficheurs (10) et les modules de saisie (12), et au moins un afficheur (10) ainsi qu'au moins un module de saisie (12) étant affectés à un conducteur du véhicule automobile et au moins un afficheur (10) ainsi qu'au moins un module de saisie (12) étant affectés à un passager et dans lequel il est possible de définir pour les modules fonctionnels (20, 22, 24, 26, 28, 30) l'afficheur (10) ou les afficheurs (10) par le biais duquel ou desquels les contenus d'information associés des modules fonctionnels (20, 22, 24, 26, 28, 30), disponibles dans le module de commande, peuvent être représentés ainsi que le module de saisie (12) ou les modules de saisie (12) par le biais duquel ou desquels les données et/ou les instructions, lesquelles sont disponibles dans le module de commande, peuvent être saisies pour les modules fonctionnels (20, 22, 24, 26, 28, 30),
**caractérisé en ce que**
la saisie des données et/ou des instructions pour un module fonctionnel (20, 22, 24, 26, 28, 30) par le biais de chacun des au moins deux modules de saisie (12) bloque à chaque fois la saisie des données et/ou des instructions depuis tous les autres modules de saisie (12) pour ce module fonctionnel (20, 22, 24, 26, 28, 30).

2. Système d'information/de communication selon la revendication 1, **caractérisé en ce que** les contenus d'information du module fonctionnel pour le réglage des paramètres du véhicule ou des fonctions du véhicule ne peuvent pas être représentés sur l'afficheur (10) d'un passager.

3. Système d'information/de communication selon la revendication 1, **caractérisé en ce qu'**aucune donnée pour le module fonctionnel destinée à régler les paramètres du véhicule ou les fonctions du véhicule ne peut être saisie par le biais du module de saisie (12) du passager.

4. Système d'information/de communication selon la revendication 1, **caractérisé en ce que** le module de saisie (12) associé au conducteur est disposé dans la console centrale du véhicule et l'afficheur (10) associé au conducteur est disposé dans le tableau de bord directement devant le conducteur.

5. Système d'information/de communication selon la revendication 1, **caractérisé en ce que** le module de saisie (12) associé au passager est disposé sur le siège du passager et l'afficheur (12) associé à ce passager est disposé dans le tableau de bord directement devant le passager.

6. Système d'information/de communication selon la revendication 5, **caractérisé en ce que** l'afficheur (10) et/ou le module de saisie (12) sont configurés de manière à pouvoir être rabattus vers l'extérieur.

7. Système d'information/de communication selon la revendication 1, **caractérisé en ce que** le module de saisie (12) associé à un passager sur la banquette arrière et l'afficheur (10) associé à ce passager sont intégrés dans le dos d'un dossier de l'un des sièges avant du véhicule.
